# DEMANDE DE BREVET EUROPEEN

(11) **EP 1 826 851 A1**
(43) Date de publication de la demande: **29.08.2007**
(21) Numéro de dépôt: 07290163.0
(22) Date de dépôt: 09.02.2007
(51) Int. Cl.: H01M 8/02

(54) **Elément de centrage pour un empilement de cellules électrochimiques**

(30) Priorité: 28.02.2006 FR 0601798
(71) Demandeur: Peugeot Citroen Automobiles Société Anonyme, 78140 Velizy Villacoublay (FR); COMMISSARIAT A L'ENERGIE ATOMIQUE, 75015 Paris (FR)
(72) Inventeur: Roy, Francis, 91940 Les Ulis (FR); Le Gallo, Patrick, 38560 Jarrie (FR); Poirot-Crouvezier, Jean-Philippe, 38450 Saint Georges de Commiers (FR)
(74) Mandataire: Lanceplaine, Jean-Claude

(57) **Abrégé**

L'invention concerne un réacteur électrochimique comprenant un empilement d'au moins une cellule (10), comportant un assemblage (11) membrane-électrodes disposé entre deux plaques bipolaires (12) et au moins un élément de centrage (20) disposé dans un orifice récepteur (18) ménagé dans ledit empilement. Ledit au moins élément de centrage (20) est formé par un pion (21) dont la section présente au moins deux zones de contact (22) avec la paroi interne de l'orifice récepteur (18) correspondant.

L'invention s'applique aux piles à combustible ou aux électrolyseurs.

## Description

La présente invention concerne un réacteur électrochimique.

L'invention s'applique à tout type de réacteur électrochimique, comme les piles à combustible et les électrolyseurs.

Dans ce qui suit, l'exemple d'une pile à combustible sera utilisé, mais l'invention peut s'appliquer à un électrolyseur.

Une pile à combustible est un dispositif de production d'électricité par réaction électrochimique entre un carburant, par exemple un gaz contenant de l'hydrogène, et un comburant, par exemple un gaz contenant de l'oxygène, séparés par une paroi constituée d'un électrolyte solide. Dans un tel dispositif, lorsque le carburant est un gaz hydrogéné, et le comburant un gaz oxygéné, le gaz hydrogéné et le gaz oxygéné réagissent pour former de l'eau, tout en générant un courant électrique qui peut être utilisé pour des usages divers.

D'une façon générale, une pile à combustible est constituée d'un empilement de cellules réactives ou cellules élémentaires constituées chacune d'un assemblage membrane-électrodes inséré entre deux plaques bipolaires comportant des canaux destinés à assurer la circulation, d'une part, du carburant, d'autre part, du comburant, et enfin d'un fluide caloporteur tel que de l'eau. L'assemblage membrane-électrodes est un matériau multicouches, connu en lui-même, comprenant une couche constituée de la membrane d'électrolyte solide proprement dite, disposée entre deux couches actives constituées en, respectivement une cathode et une anode, revêtues elles-mêmes de deux couches externes dites couches de diffusion. L'empilement des cellules élémentaires est généralement maintenu serré entre deux plaques terminales bridées par des goujons s'étendant d'une plaque terminale à l'autre et traversant l'empilement de cellules élémentaires.

L'effort de serrage ainsi appliqué sur l'ensemble de l'empilement des cellules permet d'assurer les fonctions d'étanchéité entre les différents circuits ainsi qu'entre les circuits fluides et l'environnement et permet également de minimiser les résistances de contact électrique. Afin de garantir le bon positionnement des plaques les unes par rapport aux autres de chaque cellule au moment du serrage des cellules entre elles ainsi qu'au cours du fonctionnement de la pile à combustible, chaque cellule comporte un système de centrage des plaques entre elles.

Ce système de centrage est généralement constitué de deux éléments de centrage disposés chacun dans un orifice récepteur ménagé dans l'assemblage membrane-électrode et dans les deux plaques bipolaires.

Chaque élément de centrage est formé par un pion cylindrique de longueur égale à au moins l'épaisseur de l'ensemble et les deux pions permettent de gérer trois degrés de liberté. En effet, l'un des pions sert à positionner les plaques les unes par rapports aux autres et bloque deux degrés de liberté tandis que le second pion sert à imposer une position angulaire. Ce second pion bloque le troisième degré de liberté. Généralement pour réaliser ce positionnement, le premier pion est placé dans l'orifice correspondant avec un minimum de jeu et le second pion est placé dans un trou oblong.

Mais, pour obtenir un centrage correct, il est nécessaire de minimiser le jeu, d'une part, entre les orifices ménagés dans les plaques bipolaires et les pions et, d'autre part, entre l'assemblage membrane-électrodes et les pions. Dans ces conditions, les deux plaques bipolaires et l'assemblage membrane-électrodes étant de très faible épaisseur, le risque d'arcboutement ou le risque de blocage de ces éléments est inévitable, ce qui se traduit par des distorsions du flux d'effort dans les plaques bipolaires occasionnant localement des concentrations de contraintes et des déformations.

L'invention a pour but de proposer un réacteur électrochimique qui permet, par des moyens simples et peu onéreux, d'éviter ces inconvénients en limitant les risques d'arc-boutement ou de blocage des plaques bipolaires de chaque cellule, tout en facilitant l'assemblage de l'empilement des différentes cellules dans un réacteur électrochimique.

L'invention a donc pour objet un réacteur électrochimique comprenant un empilement d'au moins une cellule comportant un assemblage membrane-électrodes disposé entre deux plaques bipolaires et au moins un élément de centrage disposé dans un orifice récepteur ménagé dans ledit empilement, caractérisé en ce que ledit au moins élément de centrage est formé par un pion dont la section présente au moins deux zones de contact avec la paroi interne de l'orifice correspondant.

Selon d'autres caractéristiques de l'invention :
- les zones de contact sont régulièrement réparties autour de la section du pion,
- ledit au moins pion comporte, à sa périphérie, deux zones de contact opposées,
- ledit au moins pion comporte, à sa périphérie, trois zones de contact réparties à 120°,
- ledit au moins pion comporte, à sa périphérie, quatre zones de contacts réparties à 90°,
- chaque zone de contact est formée par une surface courbe de profil complémentaire au profil interne de l'orifice récepteur correspondant,
- les zones de contact s'étendent parallèlement les unes aux autres,
- les génératrices de chaque zone de contact sont rectilignes,
- les génératrices de chaque zone de contact forment une hélice,
- les zones de contact sont séparées entre elles par des lamages plans ou courbes, et
- le réacteur comprend en outre des moyens de serrage de l'au moins une cellule perpendiculairement à sa surface de façon à assurer un contact électrique satisfaisant aux points de contact entre les plaques bipolaires et l'assemblage membrane-électrodes.

Le réacteur électrochimique est formé par une pile à combustible ou un électrolyseur.

L'invention sera mieux comprise à la lecture de la description qui va suivre, donnée à titre d'exemple et faite en se référant aux dessins annexés, sur lesquels :
- la figure 1 est une vue schématique d'une pile à combustible formé à partir d'un empilement de cellules élémentaires, conforme à l'invention,
- la figure 2 est une vue schématique en perspective éclatée d'une cellule élémentaire, conforme à l'invention,
- la figure 3 est une vue schématique en perspective éclatée et à plus grande échelle d'une cellule élémentaire et des éléments de centrage des plaques de cette cellule,
- les figures 4A à 4D sont des vues schématiques en coupe transversale de trois modes de réalisation d'un élément de centrage,
- les figures 5A à 5C sont des vues schématiques en coupe transversale de quatre autres modes de réalisation d'un élément de centrage, et
- la figure 6 est une vue schématique en coupe transversale d'un autre mode de réalisation d'un élément de centrage.

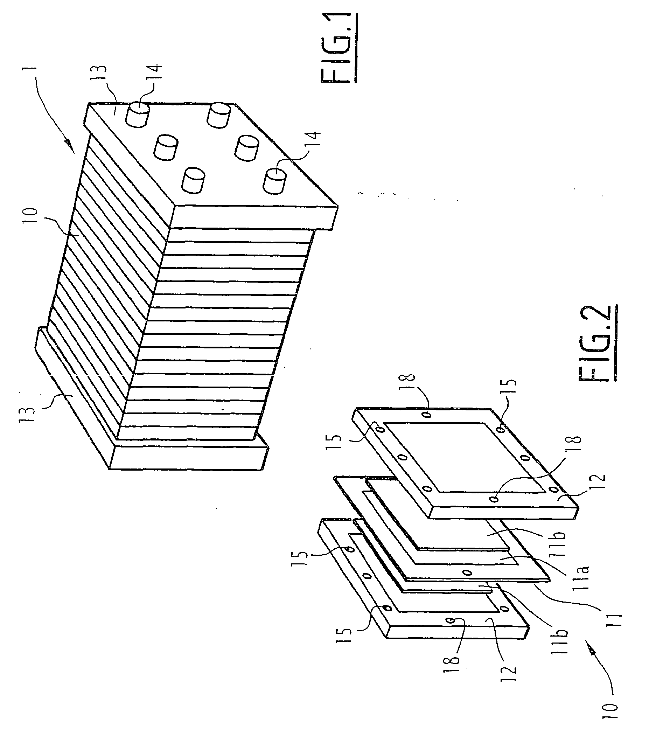

Sur la figure 1, on a représenté schématiquement une pile à combustible désignée dans son ensemble par la référence 1 qui permet de produire de l'électricité par réaction électrochimique entre un carburant, par exemple un gaz contenant de l'hydrogène, et un comburant, par exemple un gaz contenant de l'oxygène, séparés par une paroi constituée d'un électrolyte solide. Lorsque le carburant est du gaz hydrogéné et le comburant est du gaz oxygéné, le gaz hydrogéné et le gaz oxygéné réagissent pour former de l'eau, tout en générant un courant électrique qui peut être utilisé pour des usages divers, comme par exemple l'alimentation d'un moteur électrique de propulsion d'un véhicule automobile.

De façon classique, la pile à combustible 1 est constituée d'un empilement de cellules élémentaires désignées chacune dans son ensemble par la référence 10 et qui est constituée, comme montré à la figure 2, d'un assemblage membrane-électrodes 11 inséré entre deux plaques bipolaires 12 comportant des canaux destinés à assurer la circulation, d'une part, du carburant, d'autre part, du comburant, et enfin, d'un fluide caloporteur tel que de l'eau.

L'assemblage 11 membrane-électrode est un matériau multicouches, de type connu, comprenant une couche constituée de la membrane d'électrolyte solide 11 a proprement dite, disposée entre deux couches actives 11 b constituant une cathode et une anode, revêtues elles mêmes de deux couches externes dites couches de diffusion.

L'empilement de cellules élémentaires 10 est maintenu serré entre deux plaques terminales 13 bridées par des goujons 14 s'étendant d'une plaque terminale 13 à l'autre et soit traversant l'empilement de cellules élémentaires 10 par des orifices 15 (figure 2) ; soit étant positionnés en périphérique de l'empilement.

Les goujons 14 permettent d'appliquer un effort de serrage sur l'ensemble de l'empilement des cellules élémentaires 10 pour assurer les fonctions d'étanchéité entre les différents circuits ainsi qu'entre les circuits fluides et l'environnement et pour minimiser les résistances des contacts électriques.

De plus, pour garantir le bon positionnement de l'assemblage membrane-électrodes 11 et des deux plaques bipolaires 12, chaque cellule 10 comporte au moins deux éléments de centrage 20.

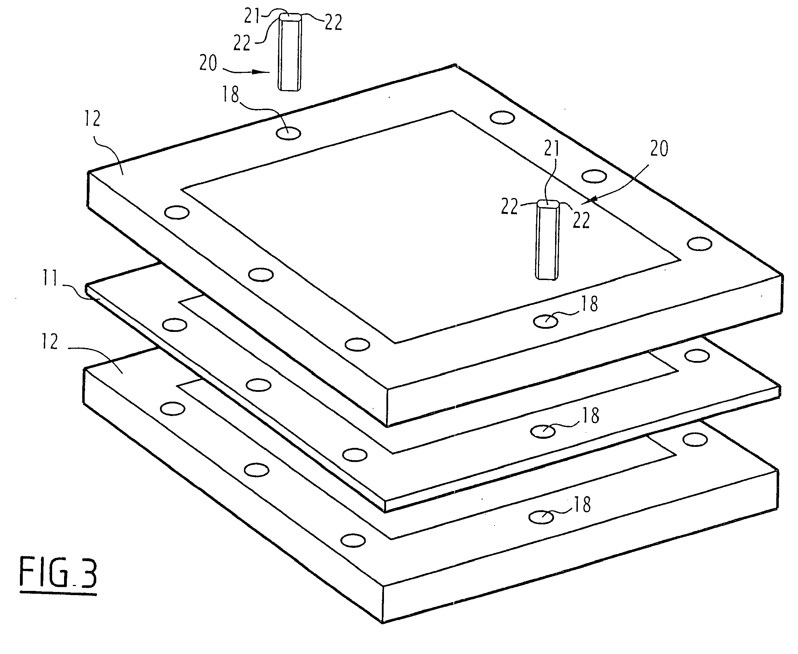

Ainsi que montré à la figure 3, chaque élément de centrage 20 est formé par un pion 21 disposé dans un orifice récepteur 18 ménagé dans l'assemblage 11 membrane-électrode et dans les deux plaques bipolaires 12.

D'une manière générale, la section d'au moins un pion 21 présente au moins deux zones de contact 22 avec la paroi interne de l'orifice 18 correspondant et les zones de contact 22 sont régulièrement réparties autour de la section du pion 21.

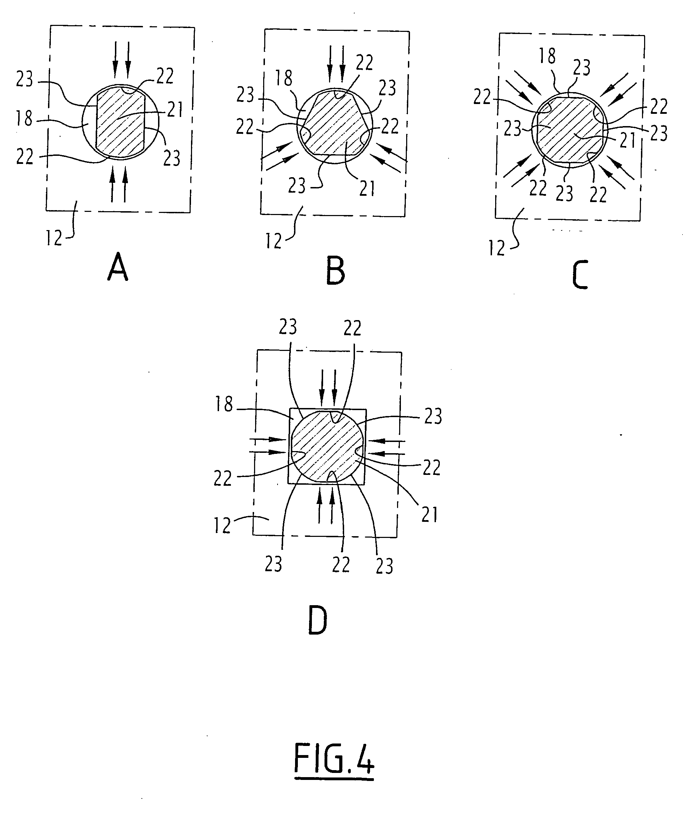

Selon un premier mode de réalisation représenté à la figure 4A, chaque pion 20 comporte, à sa périphérie, deux zones de contact 22 opposées. Selon un deuxième mode de réalisation représenté à la figure 4B, chaque pion 21 comporte, à sa périphérie, trois zones de contact 22 réparties à 120°, et selon un troisième mode de réalisation représenté à la figure 4C, chaque pion 21 comporte, à sa périphérie, quatre zones de contacts 22 réparties à 90°.

Chaque zone de contact 22 est formée par une surface courbe du profil complémentaire au profil interne de l'orifice récepteur 18 correspondant et ces zones de contact 22 s'étendent parallèlement les unes aux autres.

De préférence, les génératrices de chaque zone de contact 22 sont rectilignes.

Selon une variante, non représentée, les génératrices de chaque zone de contact 22 forment une hélice.

Selon une autre variante, l'orifice 18 peut ne pas être un cercle. En effet, l'orifice 18 peut avoir une forme oblongue ou carrée, comme montré à la figure 4D.

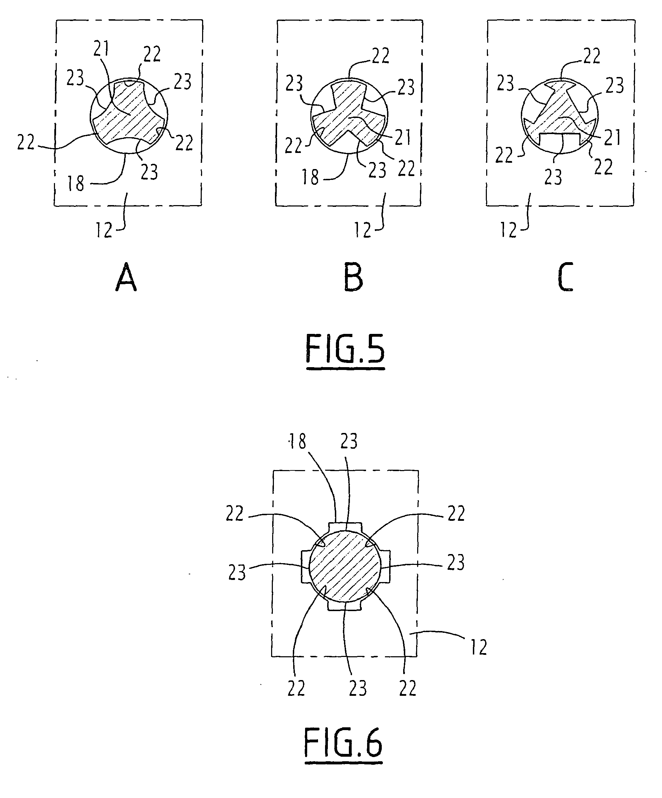

Les zones de contact 22 sont séparées par des lamages 23 réalisés par usinage. Ces lamages 23 peuvent être des lamages plans (figures 4A à 4C) ou par des lamages courbes (figure 5A). Les lamages 23 peuvent également avoir des formes plus complexes telles que représentées sur les figures 5B et 5C. Les formes destinées à réduire la surface de contact de chaque pion 21 peuvent être réalisées par tout moyen approprié, comme par exemple par usinage, par moulage ou également par assemblage de plusieurs pièces soudées ou emboîtées. Un orifice central peut être ménagé dans le pion 21. Suivant la nature des plaques 12 bipolaires, en matériau conducteur électrique ou non, les pions 21 sont réalisés en métal ou en polymère.

Enfin selon une autre variante, les volumes libres créés entre le pion 21 et l'orifice 18 correspondant et réalisés en enlevant de la matière audit pion 18, peuvent aussi être créés en enlevant de la matière dans les plaques bipolaires 12 ou l'assemblage 11 membrane-électrodes sur le pourtour de l'orifice 18.

La figure 6 présente un pion 21 cylindrique placé dans un orifice 18 en forme de croix à quatre branches. D'autres formes sont bien évidemment possibles, comme par exemple deux ou trois branches ou une autre forme que des évidements à parois planes. Les zones de contact sont également des surfaces courbes localisées.

La fonction de centrage est assurée, ainsi que le guidage, au moment du montage de l'assemblage 11 membrane-électrodes entre les deux plaques bipolaires 12.

Les zones de contact 22 de chaque pion 21 étant réduites par rapport aux pions utilisés jusqu'à présent, les frottements entre l'assemblage 11 et les plaques bipolaires 12 sont minimisés et le flux d'efforts lors du serrage des cellules élémentaires 10 entre les deux plaques terminales 13, se propagent plus facilement dans l'empilement desdites cellules élémentaires 10, ce qui permet de limiter les risques d'arc-boutement ou de blocage.

La cellule de pile à combustible selon l'invention présente donc un coût de réalisation faible et les risques de défaillance au niveau de l'étanchéité sont limités.

Lors du fonctionnement de la pile à combustible, l'empilement de cellules élémentaires présente une certaine souplesse et le système est auto-adaptatif sous l'effet de la dilatation différentielle de chaque cellule. Les contraintes générées dans l'empilement sont homogènes et la résistance interne de la pile est minimisée ce qui améliore le rendement de la pile et sa durée de vie.

## Revendications

1. Réacteur électrochimique comprenant un empilement d'au moins une cellule (10) comportant un assemblage (11) membrane-électrodes disposé entre deux plaques bipolaires (12) et au moins un élément de centrage (20) disposé dans un orifice récepteur (18) ménagé dans ledit empilement, **caractérisé en ce que** ledit au moins élément de centrage (20) est formé par un pion (21) dont la section présente au moins deux zones de contact (22) avec la paroi interne de l'orifice récepteur (18) correspondant.

2. Réacteur électrochimique selon la revendication 1, **caractérisé en ce que** les zones de contact (22) sont régulièrement réparties autour de la section du pion (21).

3. Réacteur électrochimique selon la revendication 1, **caractérisé en ce que** ledit au moins pion (21) comporte, à sa périphérie, deux zones de contact (22) opposées.

4. Réacteur électrochimique selon la revendication 1, **caractérisé en ce que** ledit au moins pion (21) comporte, à sa périphérie, trois zones de contact (22) réparties à 120°.

5. Réacteur électrochimique selon la revendication 1, **caractérisé en ce que** ledit au moins pion (21) comporte, à sa périphérie, quatre zones de contact (22) réparties à 90°.

6. Réacteur électrochimique selon l'une quelconque des revendications précédentes, **caractérisé en ce que** chaque zone de contact (22) est formée par une surface courbe de profil complémentaire au profil interne de l'orifice récepteur (18) correspondant.

7. Réacteur électrochimique selon l'une quelconque des revendications précédentes, **caractérisé en ce que** les zones de contact (22) s'étendent parallèlement les unes aux autres.

8. Réacteur électrochimique selon l'une quelconque des revendications précédentes, **caractérisé en ce que** les génératrices de chaque zone de contact (22) sont rectilignes.

9. Réacteur électrochimique selon l'une quelconque des revendications 1 à 7, **caractérisé en ce que** les génératrices de chaque zone de contact (22) forment une hélice.

10. Réacteur électrochimique selon l'une quelconque des revendications précédentes, **caractérisé en ce que** les zones de contact (22) sont séparées entre elles par des lamages (23) plans ou courbes.

11. Réacteur électrochimique selon l'une quelconque des revendications 1 à 10, **caractérisé en ce qu'**il comprend en outre des moyens (13, 14) de serrage de l'au moins une cellule (10) perpendiculairement à sa surface de façon à assurer un contact électrique satisfaisant aux points de contact entre les plaques bipolaires (12) et l'assemblage (11) membrane-électrodes.

12. Réacteur électrochimique selon l'une quelconque des revendications 1 à 11, **caractérisé en ce qu'**il est formé par une pile à combustible.

13. Réacteur électrochimique selon l'une quelconques des revendications 1 à 11, **caractérisé en ce qu'**il est formé par un électrolyseur.
